# EUROPÄISCHE PATENTANMELDUNG

(11) **EP 1 110 812 A2**
(43) Veröffentlichungstag der Anmeldung: **27.06.2001**
(21) Anmeldenummer: 00890386.6
(22) Anmeldetag: 22.12.2000
(51) Int. Cl.: B60P 3/20

(54) **Abtrennungen für geschlossene LKW-Aufbauten**

(30) Priorität: 23.12.1999 DE 19962825
(71) Anmelder: Translock Aktiengesellschaft, 9495 Triesen, Liechtenstein (LI)
(72) Erfinder: Walter, Peter, A-2700 Katzelsdorf (AT)
(74) Vertreter: Patentanwälte BARGER, PISO & PARTNER

(57) **Zusammenfassung**

Die Erfindung betrifft eine Abtrennung für geschlossene LKW-Aufbauten (1), insbesondere thermoisolierte Abtrennungen für LKW-Aufbauten, bevorzugt für solche mit Kühlvorrichtung

Die Erfindung ist dadurch gekennzeichnet, daß zumindest eine in Fahrzeuglängsrichtung verlaufende Schiene (3) in der Decke des Aufbaues angeordnet ist, daß ein im wesentlichen vertikal verlaufender Zapfen (4,4') in dieser Schiene (3) verschieblich geführt bzw. gelagert ist, der zwei Flügel (6,7;6',7') trägt, die um ihn herum drehbar angeordnet sind und untereinander bis auf zumindest 90° aneinander drehbar sind.

Die Erfindung betrifft auch Ausgestaltungen einer solchen Abtrennung.

## Beschreibung

Die Erfindungen betrifft Abtrennungen für geschlossene LKW-Aufbauten, insbesondere thermoisolierte Abtrennungen für LKW-Aufbauten, bevorzugt für solche mit Kühlvorrichtung.

Bekannt sind derartige Abtrennungen aus dem DE 94 10 286.4 U und der JP 10114244 A.

Im DE-U wird der Begriff "längsverstellbare Teleskoptrennwand" öfters verwendet, doch nicht in dem Sinn, daß die Trennwand normal zu ihrer Fläche und somit in Längsrichtung des Fahrzeuges verschieblich wäre, sondern so, daß die Trennwand fest im Fahrzeug in Fahrzeuglängsrichtung eingebaut ist und aus dem Laderaum zwei schlauchartige, schwer zugängliche Bereiche schafft, von denen der eine noch mittels einer festen Quertüre in zwei Teilbereiche unterteilbar ist. Der Begriff "längsverstellbar bezieht sich auf die nach Art einer Schiebetüre verstellbare Länge dieser Wand, die somit auch einen bis zu 50 % der Kofferlänge ungeteilten Bereich schaffen kann.

Die JP-A schlägt eine einfache, klappbare Isoliermatte vor, die durch die klappbare Ausgestaltung weniger Platz beim Zugang zu den von ihr abgedeckten Bereichen benötigt.

Eine große Anzahl von LKW-Aufbauten (darunter fallen auch Aufbauten für Anhänger und Auflieger), insbesondere für die Belieferung von Geschäften für Letztverbraucher sind so ausgelegt, daß eine Vielzahl von Artikel unterschiedlicher Natur gleichzeitig transportiert werden können. Dies können insbesondere Lebensmittel, Tiefkühlwaren und Nicht-Lebensmittel sein. Aus diesem Grund ist es seit langem wünschenswert, einen geschlossenen LKW-Aufbau in mehrere Temperaturzonen zuverlässig und möglichst einfach und rasch aufteilen zu können. Wegen der Notwendigkeit, auch das Laden und Beladen möglichst rasch und ohne lange Standzeiten zu verursachen, durchführen zu können, sind fast alle derzeit für solche Einsätze verwendeten Behälter (Paletten, Container, etc.) genormt bzw. zumindest firmenintern vereinheitlicht und es haben sich Rollcontainer mit zumindest im wesentlichen quadratischer Grundfläche so gut wie vollständig durchgesetzt.

Zufolge der Vorschriften der Straßenverkehrsordnungen für die Maximalabmessungen für LKW's ordnet man ülicherweise in einem LKW-Aufbau drei Reihen von jeweils neun (bei anderen Längen des Aufbaues auch mehr oder weniger, im folgenden wird aber der Einfachheit halber im allgemeinen von einem solchen 3 x 9 Aufbau gesprochen) solcher Rollcontainern an, die wiederum, da mit genau quadratischer oder ungefähr quadratischer Grundfläche ausgebildet, die Grundfläche des LKW-Aufbaues im wesentlichen Lückenfrei füllen.

LKW's tragen Kühlaggregate (in manchen Fällen auch Heizaggregate) zumeist im Bereich oberhalb der Fahrerkabine, entweder an dieser oder am Aufau befestigt und es erfolgt daher das Einblasen der gekühlten Luft in fast allen Fällen von der Frontseite des Aufbaues her. andere Möglichkeiten beinhalten das Einblasen "Überkopf" an verschiedenen Stellen von Öffnungen in der Decke nach unten, ins Innere des Aufbaues.

Als eine Folge dieser vorgegebenen Bedingungen wurden in der Vergangenheit Trennwände geschaffen, die entweder die Form von Flächen passender Größe aus isolierendem Material waren und zwischen die Rollcontainer gestellt wurden und gegebenenfalls mittels Spannelementen durch Reibschluß an der Decke und dem Boden des Fahrzeuges fixiert wurden oder es wurden an der Decke des Fahrzeuges Längsschienen vorgesehen, an denen verschieblich Querwände befestigt waren, die hochklappbar waren, um die Rollcontainer unter der hochgeklappten Wand durchschieben zu können.

Die erstgenannte Lösung ist unpraktisch, weil die Zwischenwände abgestellt werden müssen, wenn sie nicht gebraucht werden oder wenn man zu Rollcontainern gelangen will, die hinter den Wänden stehen, die zweitgenannte Lösung ist problematisch, weil der Fahrzeugaufbau nur quer zur Fahrtrichtung unterteilt werden kann und nur gerade durchgehend unterteilt werden kann, so daß die Unterteilung in Schritten von jeweils drei Rollcontainern erfolgt, unabhängig vom tatsächlichen Bedarf.

Darüberhinaus sind die, von der Ladebordwand gesehen hinter der Zwischenwand liegenden Rollcontainer nicht gut zugänglich, da zuerst vor der Zwischenwand in allen drei Reihen genügend Platz geschaffen werden muß, um die Wand hochklappen zu können und dann erst der Zugang frei ist, wobei die thermische Trennung über die gesamte Fläche wegfällt, während die Trennwand hochgeklappt ist.

Fortschrittlichere Varianten haben die noch immer gereade durchgehend ausgebildete Zwischenwand in mehrere Abschnitte (meist einen pro Rollcontainerreihe) unterteilt, um nur vor dem jeweils benötigten Segment den Platz für das Hochklappen freimachen zu müssen. Die Probleme mit der frei wählbaren Unterteilung des Aufbaues werden dadurch aber nicht geringer.

Wenn man die enge Kalkulation am Transportsektor berücksichtigt und den Energiebedarf und die Umweltverschmutzung, die durch den zeitweiligen vollständigen Wegfall der Zwischenisolierung und den dadurch vermehrten Kühlenergieaufwand entsteht, so ist unmittelbar einsichtig, daß ein großer Bedarf an einer Abtrennung besteht, durch die die Zugänglichkeit zu den einzelnen Rollcontainern nicht beeinträchtigt wird und die rasch und einfach in Abhängigkeit vom zu transportierenden Gut aufstellbar bzw. entfernbar ist, ohne hier Schranken oder Begrenzungen zu schaffen.

Die Erfindung bezweckt ein solches Trennwandsystem zu schaffen, das die genannten Nachteile nicht aufweist, dafür aber die erwünschten Vorteile besitzt.

Erfindungsgemäß ist dazu vorgesehen, daß bei einem LKW-Aufbau zumindest eine in Fahrzeuglängsrichtung verlaufende Schiene in der Decke angeordnet ist, daß ein im wesentlichen vertikal verlaufender Zapfen in dieser Schiene verschieblich geführt bzw. gelagert ist, der zwei Flügel trägt, die um ihn herum drehbar angeordnet sind und untereinander bis auf zumindest 90° aneinander drehbar sind.

Durch diese Maßnahme ist es möglich, wahlweise an jeder Stelle der Länge des LKW-Aufbaues zwei Flügel einer solchen Abtrennwand anzuordnen und diese quer zur Fahrzeuglängsrichtung und/oder in Fahrzeuglängsrichtung zu bringen. Bei herkömmlichen Aufbauten mit drei Reihen von Rollcontainern wird man zumindest zwei Schienen, mit jeweils zumindest einem solchen Zapfen samt Flügeln (Trennelement genannt) anordnen, wodurch es möglich wird, den LKW-Aufbau (bei einer Länge von neun Rollcontainern) in Ein-Platz-Schritten von 1:26 bis 26:1 zu unterteilen, sodaß für jede Frachtaufteilung die richtige Raumaufteilung gefunden wird.

Um durch diese erfindungsgemäße Trennwand zu den jeweils dahinter befindlichen Rollcontainern zu gelangen, ist es nur notwendig, genau den einen Platz vor einem der Flügel frei zu machen und diesen sodann um 90° zu verdrehen, wodurch der Zugang zum anderen Bereich geschaffen ist. Dabei bleibt die Abtrennung der beiden Bereiche des Aufaues aber im wesentlichen geschlossen und durch die leichte Manipulierbarkeit ist es für den Benutzer möglich, nach dem Hindurchschieben der gewünschten Container die Bereiche wieder vollständig voneinander zu trennen, ohne daß es dazu einer so umständlichen Handhabung wie bisher bedarf, weshalb ja bisher auch diese Abtrennung meist unterblieben ist.

Die Erfindung wird im folgenden an Hand eines Beispieles näher erläutert. Dabei zeigt
die Fig. I einen Vertikalschnitt quer zur Fahrzeuglängsrichtung mit einer Draufsicht auf eine erfindungsgemäße Abtrennung,
die Fig. 2 einen Schnitt entlang der Linie II-II der Fig. 1 und
die Fig. 3 sechs verschiedene Horizontalschnitte durch den Frontteil eines mit erfindungsgemäßen Abtrennungen versehenen LKW-Aufbaues zur Erläuterung der Verwendung der erfindungsgemäßen Abtrennungen.

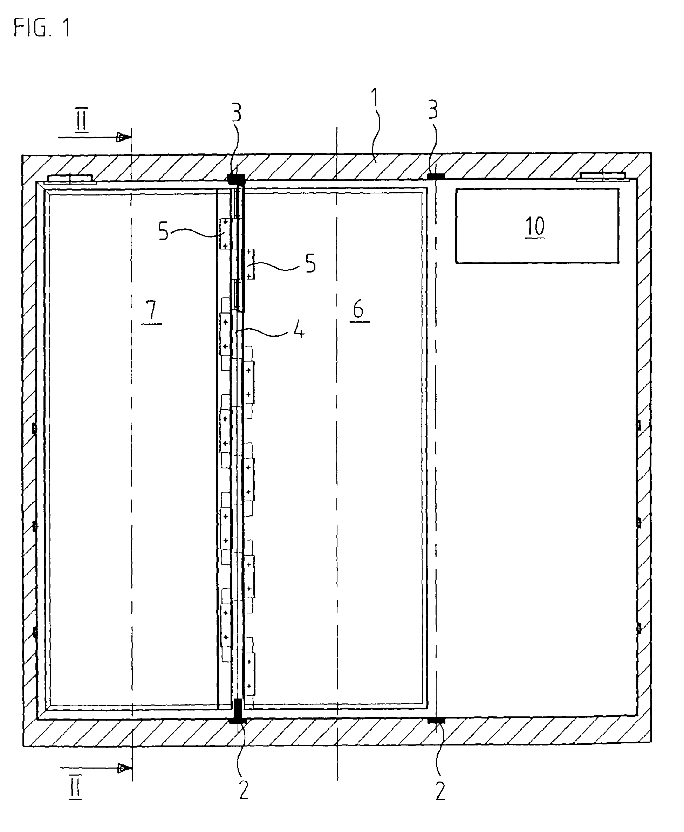

Wie aus Fig. 1 ersichtlich ist, sind in einem erfindungsgemäß ausgestatteten LKW-Aufbau 1, bei dem Roll-Container od.dgl. in drei Reihen nebeneinander transportiert werden sollen, zwei Bodenschienen 2 und im Bereich vertikal darüber zwei Deckenschienen 3, jeweils in Fahreuglängsrichtung verlaufend, angeordnet. In diesen Schienen 2, 3 ist ein Zapfen 4 verschieblich montiert und kann somit über die gesamte Länge der Schienen im Inneren des Aufbaues 1 verschoben werden.

Wie oben ausgeführt, ist die Deckenschiene wesentlich, da sie zur eines Trennelementes ausreicht und in vielen Fällen Bodenschienen wegen der komplizierten Reinigung und damit aus Hygienegründen nicht erwünscht oder gar nicht möglich sind.

Die Schienen und damit die entsprechenden Führungsteile der Zapfen 4 sind vom Fachmann in Kenntnis der Erfindung leicht wählbar, es können liegende, C-förmige Profile, ähnlich Gardinenschienen in denen die Trennelemente richtiggehend hängen, verwendet werden, oder einfache U-förmige Profile, die die Zapfen nur führen.

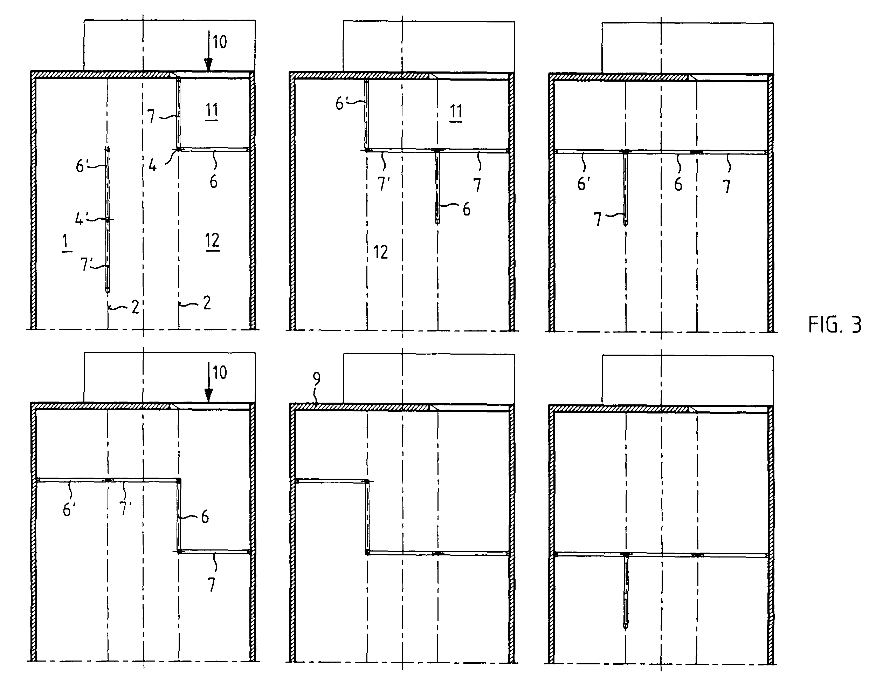

Am Zapfen 4 sind mittels Scharnieren 5 ein erstes Wandelement 6 und ein zweites Wandelement 7 drehbar befestigt. Es können die Wandelemente 6, 7 so, wie in Fig. 1 dargestellt, in zueinander fluchtende Lage gebracht werden oder sie können, wie aus Fig. 3 ersichtlich ist, in einem Winkel von 90° zueinander angeordnet werden. Sie können auch Zwischenlagen einnehmen und sie können auch näher als 90° zueinander angeordnet werden, jeweils in Abhängigkeit von den verwendeten Scharnieren, und sie können, in Ausnahmefällen, bei Verwendung von Doppelscharnieren, auch zusammenfallend angeordnet werden, was aber im allgemeinen keine Vorteile bringt.

Im dargestellten Ausführungsbeispiel wird der Zapfen 4 durch eine Führungsnase 8 in seiner vertikalen Lage gehalten und so am Verkanten während des Verschiebens gehindert. Die Führungsnase 8 besteht aus einem dünnen Blech oder hochwertigem Kunststoff und/oder durch entsprechende Querschnittsverjüngungen in den Wandelementen 6, 7 ist es möglich, beide Wandelemente 6, 7 (aber nur im oben genannten Ausnahmefall gleichzeitig) auch in die Richtung der Führungsnase 8 ragend anzuordnen.

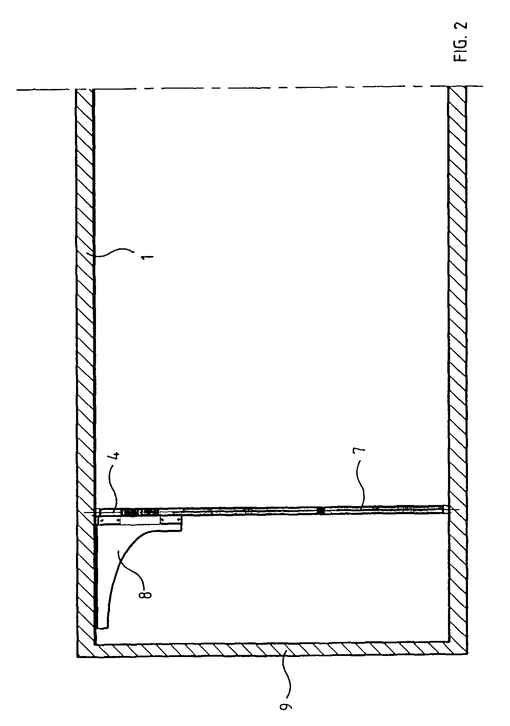

So wie in Fig. 2 dargestellt, wird die Führungsnase 8 in Richtung von der Ladebordwand weg angeordnet, somit in so gut wie allen Einbausituationen zum Einlaß der gekühlten Luft hin, da es in dieser Richtung nicht notwendig ist, den Zapfen 4 bis zur Frontwand 9 verschieben zu können. Bei Deckeneinblasung kann selbverständlich die Führungsnase 8 in die andere Richtung zeigen.

Es ist selbstverständlich möglich, die Wandelemente 6, 7 und/oder den Zapfen 4 nach Erreichen der jeweils gewünschten Lage zu fixieren. Dies kann entweder durch eine Nocke erfolgen, die den Zapfen 4 in seiner Dachschiene 3 (wird gegenüber der Bodenschiene 2 bevorzugt) durch Reibungsschluß fixiert oder es wird eine federbelastete oder ebenfalls nach Art einer Nocke die Wandelemente im Dachbereich und/oder Bodenbereich fixierende Verriegelung vorgesehen. Es wird dabei eine Fixierung im Dachbereich bevorzugt, da dabei die Gefahr des Eindringens von Schmutz oder Fremdkörpern in den Verriegelungsmechanismus nicht so groß ist wie im Bodenbereich und da die Zugänglichkeit besser ist.

Es ist auch möglich, in Abhängigkeit vom Rastermaß, das durch die verwendeten Rollcontainer vorgegeben ist, einen Lochraster an der Decke und/oder am Boden vorzusehen und die Fixierung mittels Riegeln, die auch federbelastet sein können und die mit dem Lochraster zusammenwirken, vorzunehmen.

Übliche Rollcontainer sind maximal etwa mannshoch, die lichte Höhe des Aufaues ist bedeutend größer, schon um die gekühlte Luft zirkulieren zu lassen und es kann somit im Kopfbereich oder knapp darüber eine nach oben wirkende Verriegelungsvorrichtung leicht eingebaut werden.

Die Wandelemente 6, 7 sind beim beschriebenen Verwendungszweck natürlich aus thermoisolierendem Material, dazu kann jedes dem Fachmann für LKW-Aufbauten bekannte Material verwendet werden und es kann insbesondere jede Art der Abdichtung gegenüber den benachbarten Wandabschnitten des Aufbause bzw. benachbarter Trennwandelemente vorgenommen werden. Dazu gehören insbesondere Gummilippen, Bälge, Bürstendichtungen und ähnliches, bis hin zu aufblasbaren Dichtungen, die dann bevorzugt auch gleich die Aufgabe der mechanischen Fixierung übernehmen.

Zur mechanischen Fixierung muß noch ausgeführt werden, daß die voneinander getrennten Rollcontainer oder anderen Gebinde für sich fixiert werden und die Wandelemente bzw. die Zapfen und deren Führungsschienen nicht die Aufgabe der mechanischen Fixierung des Ladegutes zu übernehmen haben und daher auch diesbezüglich nicht ausgelegt sein müssen.

Auf diese Weise ist es auch möglich, die Wandelemente so dünn und dabei doch thermisch gut isolierend auszugestalten, daß sie in den zur Manipulation des Ladegutes notwendigen Freiräumen untergebracht werden können, ohne daß dadurch die Ladekapazität verringert wird.

Es können zufolge ihrer leichten Verschieblichkeit aber auch umgekehrt die Trennelemente mit oder ohne thermischer Isolierwirkung als mechanische Fixierung für das Ladegut herangezogen werden, wobei dann natürlich sowohl die Trennelemente als auch deren Fixierung mechanisch ausreichend stabil ausgebildet sein muß. Diese Ausbildung ist in Kenntnis der Erfindung für den Fachmann auf dem Gebiete des Karosseriebaues keine Schwierigkeit. Für diesen Fall eignen sich auch besonders die pneumatischen Dichtungen/Fixierungen, da durch deren große Andruckflächen die auftretenden Kräfte über große Bereiche der Decke (am Boden besteht kein Stabilitätsproblem) verteilen.

Aus Fig. 3 sind einige der Abteilungsmöglichkeiten ersichtlich: In der ersten Teilfigur wird von der erfindungsgemäßen Wandabteilung mit dem Zapfen 4 und den Wandelementen 6 und 7 ein einzelner Container-Platz als Kaltbereich 11 abgeteilt, der restliche Laderaum bildet einen Warmbereich 12. Es kann selbstverständlich auch dieser Warmbereich 12 noch gekühlt sein, er ist aber zumeist nicht auf die Temperatur des Kaltbereiches 11 gekühlt.

Bei dieser Abteilung ist ein zweites erfindungsgemäßes Abteilelement mit einem Zapfen 4', und mit Wandelementen 6' und 7' in inaktiver Stellung, mit den Wandelementen in Fahrzeuglängsrichtung verlaufend, angeordnet.

Wenn nun zwei Stellplätze als Kaltbereich 11 ausgebildet werden sollen, wie dies die Teilfigur 2 zeigt, so werden die Wandelemente 6 und 7 um 90° verdreht angeordnet und es werden die Wandelemente 6', 7' nach Verschieben des Zapfens 4 zum Abtrennen zweier nebeneinander liegender Stellplätze als Kaltbereich 11 verwendet.

Aus der Fig. 3 geht die weitere Vergrößerung des Kaltbereiches 11 bei entsprechender Verkleinerung des Warmbereiches 12 hervor. Die Zugänglichkeit des Kaltbereiches ist dabei immer durch Freimachen nur eines der Wandelemente 6, 6', 7, 7' möglich, die vor den anderen Bereichen befindlichen Rollcontainern oder anderen Güter können an ihrem Platz bleiben.

Es ist auch leicht ersichtlich, daß bei speziellen Fuhren ohne großen Aufwand zusätzliche Elemente verwendet werden können, beispielsweise zur Ausbildung eines nur die rechte (weil vor dem Kaltlufteinlaß 10 liegend) Reihe umfassenden Kaltbereiches 11, der vom Kaltlufteinlaß 10 bis zur hinteren (nicht dargestellten) Ladebordwand reicht.

Die Erfindung ist nicht auf das dargestellte Ausführungsbeispiel beschränkt, sondern kann verschiedentlich abgewandelt werden. So ist es, beispielsweise zum Transport von rechteckigen, aber nicht quadratischen Paletten möglich, mit nur einer Schiene in der Fahrzeugmitte auszukommen, wenn beispielseise alle 80 x 120 cm messenden Paletten in Querrichtung angeordnet werden, wobei als Nachteil aber die Notwendigkeit besteht, im Falle eines gewinkelten Abtrennens des Ladaraums den Abstand zwischen den Zapfen nur in Schritten von 120 cm und nicht auch von 80 cm abstufen zu können, so daß unter Umständen ein Stellplatz verloren geht. Aber dies ist im Vergleich zu den bisherigen Abteilungen vom Handling und vom Zeitgewinn her, ein solch geringer Verlust, daß auch diese Lösung besser ist als der Stand der Technik.

Auch dieses Problem kann gelöst werden, wenn in diesem Fall ein Flügel eine Breite von 120 cm und der zweite eine Breite von 40 cm aufweist: Im Falle einer gerade durchgehenden Abteilung werden die beiden Pfosten aneinander gerückt und die kurzen Flügel einer nach vorne, einer nach hinten, in eine inaktive Lage gebracht, bei einer gestuften Abteilung überdecken die beiden kurzen Flügel gemeinsam genau die Stufe von 80 cm.

## Patentansprüche

1. Abtrennung für geschlossene LKW-Aufbauten (1), insbesondere thermoisolierte Abtrennungen für LKW-Aufbauten, bevorzugt für solche mit Kühlvorrichtung, dadurch gekennzeichnet, daß zumindest eine in Fahrzeuglängsrichtung verlaufende Schiene (3) in der Decke des Aufbaues angeordnet ist, daß ein im wesentlichen vertikal verlaufender Zapfen (4,4') in dieser Schiene (3) verschieblich geführt bzw. gelagert ist, der zwei Flügel (6,7;6',7') trägt, die um ihn herum drehbar angeordnet sind und untereinander bis auf zumindest 90° aneinander drehbar sind.

2. Abtrennung nach Anspruch 1, dadurch gekennzeichnet, daß im wesentlichen vertikal unterhalb der Schiene (3) eine Schiene (2) im Boden des Aufbaues vorgesehen ist, in die ein Führungselement der Abtrennung ragt.

3. Abtrennung nach einem der vorangehenden Ansprüche, dadurch gekennzeichnet, daß die Flügel (6,7;6',7') und oder der Zapfen (4,4') Fixiermittel für eine Fixierung der Abtrennung gegenüber dem Aufbau (1) aufweisen.

4. Abtrennung nach Anspruch 3, dadurch gekennzeichnet, daß die Fixiermittel pneumatische Bälge, Wülste od.dergl. sind.

5. Abtrennung nach einem der vorangehenden Ansprüche, dadurch gekennzeichnet, daß einer Flügel (6,7;6',7') eine Breite aufweist, die im wesentlichen dem Abstand zwischen dere Schiene (3) und der ihr nächstliegenden Längswand des Aufbaues (1) entspricht.

6. Abtrennung nach einem der vorangehenden Ansprüche, dadurch gekennzeichnet, daß die Flügel (6,7;6',7') zumindest an einem ihrer Ränder Dichtmittel wie Schürzen, Bälge, Borsten, od.dergl. tragen.

7. Abtrennung nach einem der vorangehenden Ansprüche, dadurch gekennzeichnet, daß zumindest einer der Flügel (6,7;6',7') eine Breite aufweist die zumindest im wesentlichen dem Rastermaß der im Aufbau bestimmungsgemäß zu transportierenden Container entspricht.

8. Abtrennung nach einem der vorangehenden Ansprüche, dadurch gekennzeichnet, daß der Zapfen (4,4') bis zum Boden des Aufbaues durchgeht, in der oberen Schiene (3) geführt wird und mittels einer Führungsnase (8), die ebenfalls in der Schiene (3) geführt wird und die mit dem Zapfen (4,4') verbunden ist in Längsrichtung stabilisiert wird.

9. Abtrennung nach Anspruch 8, dadurch gekennzeichnet, daß der Zapfen (4,4') mit seinem unteren Ende in der unteren Schiene (2) geführt wird.
